# EUROPÄISCHE PATENTANMELDUNG

(11) **EP 4 184 063 A1**
(43) Veröffentlichungstag der Anmeldung: **24.05.2023**
(21) Anmeldenummer: 22203909.1
(22) Anmeldetag: 26.10.2022
(51) Int. Cl.: F24C 15/20, F24C 14/02

(54) **BACKOFEN MIT SPEZIFISCHEM KATALYSATOR, VERFAHREN**

(30) Priorität: 17.11.2021 DE 102021212941
(71) Anmelder: BSH Hausgeräte GmbH, 81739 München (DE)
(72) Erfinder: Jördens, Frank, 83278 Traunstein (DE); Roch, Klemens, 83308 Trostberg (DE); Pietsch, Marco, 83349 Palling (DE); Schmid, Evelin, 83308 Trostberg (DE); Pfersch, Harald, 83395 Freilassing (DE); Helmer, Olaf, 53757 Sankt Augustin (DE)

(57) **Zusammenfassung**

Ein Aspekt der Erfindung betrifft einen Backofen (1), mit einem Garraum (4) zum Zubereiten von Lebensmitteln und mit einer Wrasenabführvorrichtung (9) mit welcher Wrasen aus dem Garraum (4) abführbar sind, und mit einem Katalysator (8), der mit der Wrasenabführvorrichtung (9) fluidisch gekoppelt ist, so dass die in der Wrasenabführvorrichtung (9) abgeführten Wrasen mit dem Katalysator (8) katalytisch beeinflusst werden, wobei der Katalysator (8) zumindest einen Träger (13) aufweist, auf dem zumindest eine Schicht (14) mit Katalysatormaterial aufgebracht ist, wobei der Backofen (1) zumindest einen Normalbetrieb zum Zubereiten von Gargut aufweist, und einen dazu unterschiedlichen Pyrolysebetrieb aufweist, wobei der Katalysator (8) so ausgebildet ist, dass im Normalbetrieb des Backofens (1) eine Konzentration von Essigsäure in den umgesetzten Wrasen kleiner oder gleich 5 ppm beträgt. Die Erfindung betrifft auch ein Verfahren.

## Beschreibung

Ein Aspekt der Erfindung betrifft einen Backofen, der einen Garraum zum Zubereiten von Lebensmitteln aufweist. Darüber hinaus weist der Backofen eine Wrasenabführvorrichtung auf, mit welcher Wrasen aus dem Garraum abführbar sind. Der Backofen weist darüber hinaus einen Katalysator auf. Der Katalysator ist mit der Wrasenabführvorrichtung fluidisch gekoppelt, sodass die in der Wrasenabführvorrichtung geführten Wrasen mit dem Katalysator katalytisch beeinflusst werden. Der Katalysator weist zumindest einen Träger auf, auf dem zumindest eine Schicht mit Katalysatormaterial aufgebracht ist. Der Backofen weist zumindest einen Normalbetrieb zum Zubereiten von Gargut auf. Darüber hinaus weist der Backofen einen zum Normalbetrieb unterschiedlichen Pyrolysebetrieb auf.

Aus der EP 1 157 239 A1 ist ein Katalysator zur Verwendung in einem Backofen bekannt. Dieser Katalysator ist spezifisch aufgebaut und weist hintereinander angeordnete Teilkatalysatoren auf. Einer von diesen Teilkatalysatoren weist eine wirksame Oberfläche auf, die eine katalytisch wirksame Metallschicht aufweist. Um die Wirksamkeit des Katalysators bezüglich der Beseitigung von unangenehmen Gerüchen zu verbessern, weist dort zumindest ein Teilkatalysator als wirksame Oberfläche eine Metalloxidschicht auf. Der andere Teilkatalysator weist als wirksame Oberfläche eine Metallschicht aus der 8. bis 10. Nebengruppe des Periodensystems auf. Nachteil eines edelmetallhaltigen Katalysators ist die durch bei niedrigen Temperaturen auftretende unvollständige Zersetzung von Wrasenkomponenten (z.B. Ethanol), die z.B. zu einem störenden Essigsäuregeruch führen kann.

Es ist Aufgabe der vorliegenden Erfindung, einen Backofen und ein Verfahren zu schaffen, bei welchem bei der katalytischen Umsetzung von Wrasen die Erzeugung von unerwünschten Geruchskomponenten optimiert werden soll.

Diese Aufgabe wird durch einen Backofen und ein Verfahren gemäß den unabhängigen Ansprüchen gelöst.

Ein Aspekt der Erfindung betrifft einen Backofen, der einen Garraum zum Zubereiten von Lebensmitteln aufweist. Darüber hinaus weist der Backofen eine Wrasenabführvorrichtung auf, mit welcher Wrasen aus dem Garraum abführbar sind. Der Backofen weist darüber hinaus einen Katalysator auf. Der Katalysator ist mit der Wrasenabführvorrichtung fluidisch gekoppelt, sodass die in der Wrasenabführvorrichtung geführten Wrasen mit dem Katalysator katalytisch beeinflusst werden. Der Katalysator weist zumindest einen Träger auf, auf dem zumindest eine Schicht mit Katalysatormaterial aufgebracht ist. Der Backofen weist zumindest einen Normalbetrieb zum Zubereiten von Gargut auf. Darüber hinaus weist der Backofen einen zum Normalbetrieb unterschiedlichen Pyrolysebetrieb auf. Der Katalysator ist so ausgebildet, dass im Normalbetrieb des Backofens eine Konzentration von Essigsäure in den umgesetzten Wrasen kleiner oder gleich 5ppm beträgt. Eine besonders vorteilhafte Geruchsvermeidung von unangenehmen Geruchskomponenten kann dadurch erreicht werden. Insbesondere Essigsäure ist dadurch im Normalbetrieb in den umgesetzten Wrasen nicht vorhanden oder in einem Maße vorhanden, dass es insbesondere nicht wahrnehmbar ist. Dadurch kann im Normalbetrieb auch erreicht werden, dass keine Geruchsverfälschung der Zubereitungsaromen des Garguts auftritt.

In einem Ausführungsbeispiel ist der Katalysator so ausgebildet ist, dass im Normalbetrieb des Backofens eine Konzentration von Essigsäure in den umgesetzten Wrasen zwischen 1 ppm und 5 ppm beträgt.

In einem Ausführungsbeispiel ist der Katalysator so ausgebildet ist, dass im Pyrolysebetrieb des Backofens eine Konzentration von Essigsäure in den umgesetzten Wrasen kleiner 100 ppb ist. Damit kann bei der Umsetzung der Wrasen das Auftreten von Essigsäure praktisch vollständig erreicht werden. Ein nur teilweises Umsetzen von Ethanol in Essigsäure ist dadurch vermieden.

In einem Ausführungsbeispiel weist dieser Katalysator eine Aktivitätsrate auf, die bei Temperaturwerten in dem Normalbetrieb des Backofens kleiner oder gleich 35 Prozent ist. Insbesondere weist der Katalysator eine Aktivitätsrate bei Temperaturwerten im Pyrolysebetrieb größer 70 Prozent auf. Dies gilt insbesondere für eine Vergleichssubstanz, insbesondere CO und/oder C3H6. Die Aktivitätsrate für einen Katalysator kann dabei insbesondere auch unter Betrachtung der Raumgeschwindigkeit, des Trägersubstrats und des Stoffs (Vergleichssubstanz), der Stoffkonzentration der Ausgangsstoffe in einem Testreaktor bestimmt werden. In diesem Beispiel wurde der Katalysator mit einem Volumen von 7,6 ml mit einem Gasstrom von 8 l/min und folgenden Inhaltsstoffen beaufschlagt (540ppm CO, 565ppm C3H6 und 50000ppm O2, Rest N2)

Insbesondere betrifft das äquivalent auch für zumindest einen Bestandteil der Wrasen zu. Insbesondere betrifft es flüchtige Verbindungen. Insbesondere gilt dies auch für Ethanol. Durch diesen Backofen ist es erreicht, dass insbesondere zumindest Ethanol im Normalbetrieb praktisch nicht umgesetzt wird und daher kein oder ein vernachlässigbarer Essiggeruch entsteht. Dieser tritt insbesondere dann auf, wenn Ethanol nur teilweise oxidiert wird. eine solche Oxidation ist daher mit der Aktivitätsrate im Normalbetrieb praktisch minimal. Im Pyrolysebetrieb hingegen erfolgt eine nahezu vollständige Oxidation des Ethanol zu Kohlenstoffdioxid und Wasser, so dass auch dadurch dann das Auftreten von unerwünschtem Essiggeruch vermieden werden kann. Eine unerwünschte nur teilweise Umsetzung des Ethanol im Normalbetrieb kann daher vermieden werden und eine nahezu vollständige Umsetzung im Pyrolysebetrieb kann daher mit dem Katalysator erreicht werden, so dass starker Essiggeruch in allen Betriebsmodi des Backofens vermieden werden kann.

Durch einen derartigen Backofen ist es nunmehr verbessert ermöglicht, bei der Umsetzung von Bestandteilen in einem Wrasenstrom, insbesondere der Oxidation einer Substanz, insbesondere Ethanol, die Geruchsbelästigung durch Fehl- bzw. Fremdgerüche im Normalbetrieb zu reduzieren. Es tritt keine merkliche Geruchsbelästigung durch Essigsäurebildung auf. Es ist damit ebenfalls erreicht, dass eine Verringerung der Mengenanteile von Geruchskomponenten und auch anderen gasförmigen Stoffen, die im Wrasenstrom des Backofens beim Pyrolysebetrieb in die Umgebung befördert werden, erreicht wird. Durch die diesbezügliche spezifische Ausgestaltung des Katalysatormaterials werden in den unterschiedlichen Betriebsweisen des Backofens sehr differenzierte Aktivitätsraten ermöglicht. Indem gerade im Normalbetrieb diese Aktivitätsrate relativ gering ist, erfolgt hier auch nur allenfalls eine relativ geringe katalytische Umsetzung von Bestandteilen in dem Wrasenstrom, sodass im Normalbetrieb eine Geruchsbelästigung deutlich reduziert ist. Darüber hinaus ist es jedoch auch erreicht, dass gerade bei deutlich höheren Temperaturen, wie sie im Pyrolysebetrieb auftreten, eine relativ hohe Aktivitätsrate eintritt und somit eine sehr vorteilhafte katalytische Umsetzung erfolgt. Damit ist es auch erreicht, dass die grundsätzliche Aktivität des Katalysators, insbesondere des Katalysatormaterials des Katalysators, so angepasst ist, dass deren Wirksamkeit wesentlich eigentlich erst im Pyrolysebetrieb voll ausgeprägt ist. Besonders vorteilhaft ist es durch diesen Backofen ermöglicht, dass das Auftreten von Fehlgerüchen minimiert wird. Insbesondere ist es dabei erreicht, dass ein möglicher auftretender Essiggeruch in dem Ausblasstrom des Backofens unterhalb einer spezifischen Konzentration ist. Insbesondere ist es in einem Ausführungsbeispiel erreicht, dass durch diesen Backofen bei der Katalyse die spezifische Konzentration des Essiggeruchs und somit die Konzentration von Essigsäure in diesem Abluftstrom kleiner oder gleich 5 ppm, insbesondere im Bereich zwischen 1 ppm und 5 ppm, ist. Essiggeruch ist in diesem Zusammenhang ein Beispiel für einen oben genannten Fehlgeruch.

In einem Ausführungsbeispiel weist der Katalysator eine diesbezügliche oben genannte Aktivitätsrate auf, die bei Temperaturwerten im Normalbetrieb kleiner oder gleich 30 %, insbesondere kleiner oder gleich 20 %, ist, und die Aktivitätsrate bei Temperaturwerten im Pyrolysebetrieb größer 80% ist. Dadurch ist es bei diesem Backofen ermöglicht, dass für spezifische Zustände der Wrasen individuelle Aktivitätsraten des Katalysators gegeben sind. Der Katalysator ist dabei so ausgelegt, dass die Aktivität des Katalysatormaterials so angepasst ist, dass deren Wirksamkeit im Wesentlichen erst im Pyrolysebetrieb voll ausgeprägt ist. Damit ist es mit dem Backofen ermöglicht, Bestandteile der Wrasen so katalytisch umzusetzen, dass im Normalbetrieb praktisch keine Aktivität des Katalysators auftritt, im Pyrolysebetrieb jedoch eine sehr starke Aktivität auftritt, um diese Bestandteile besonders umfänglich und wirksam umzusetzen, und eine unerwünschte Geruchserzeugung vermieden wird.

In einem Ausführungsbeispiel ist die Aktivitätsrate eine Oxidation einer Substanz der Wrasen, insbesondere Ethanol.

Insbesondere bezeichnet die Aktivitätsrate im vorliegenden Kontext den prozentualen Anteil der katalytischen Umsetzung einer gasförmigen Verbindung bei einem bestimmten Temperaturwert.

In einem Ausführungsbeispiel sind die Temperaturwerte im Normalbetrieb kleiner oder gleich 330 °C, insbesondere 300 °C. In einem Ausführungsbeispiel sind die Temperaturwerte im Pyrolysebetrieb größer oder gleich 375 °C, insbesondere größer oder gleich 400 °C, insbesondere größer oder gleich 485 °C.

Besonders vorteilhaft ist die Ausgestaltung des Backofens dahingehend, dass für die Substanz der Wrasen die Aktivitätsrate bei Temperaturen größer oder gleich 425 °C größer oder gleich 90 Prozent ist. In einem Ausführungsbeispiel ist vorgesehen, dass bei dem Backofen die Aktivitätsrate des Katalysators von kleineren Temperaturen bis hinauf zu einem Temperaturwert von 275 °C, insbesondere für diese Substanz der Wrasen, maximal 33 Prozent beträgt. In einem Ausführungsbeispiel beträgt sie für Temperaturwerte bis hinauf zu 275 °C maximal 15 Prozent.

In einem Ausführungsbeispiel ist das Katalysatormaterial des Katalysators edelmetallfrei. Dies bedeutet, dass das Katalysatormaterial ohne Edelmetalle zusammengesetzt ist. Besonders vorteilhaft ist es, dass das Katalysatormaterial frei von Platin und/oder Palladium ist. Diese Ausführungsbeispiele tragen vorteilhaft dazu bei, dass die Aktivität des Katalysators beziehungsweise die Aktivitätsrate des Katalysators im Normalbetrieb sehr niedrig ist, und im Pyrolysebetrieb sehr hoch ist. In dem somit in dem Normalbetrieb die Aktivität quasi minimiert werden kann, ist die unerwünschte Geruchserzeugung minimiert. Andererseits ist im Pyrolysebetrieb die Aktivität sehr hoch, sodass eine sehr vorteilhafte katalytische Umsetzung der Bestandteile bzw. Substanzen der Wrasen erfolgt. Diese edelmetallfreie Ausgestaltung des Katalysatormaterials ermöglicht besonders vorteilhaft diese besonders starken unterschiedlichen Aktivitätsraten in den unterschiedlichen Temperaturintervallen, wie sie einerseits beim Normalbetrieb und andererseits beim Pyrolysebetrieb gegeben sind.

In einem Ausführungsbeispiel weist das Katalysatormaterial des Katalysators ein erstes Metalloxid auf, welches ein Metall aus der Mangangruppe des Periodensystems aufweist. In einem Ausführungsbeispiel weist das Katalysatormaterial des Katalysators ein zweites Metalloxid auf, welches ein Metall aus der Kupfergruppe des Periodensystems aufweist. In einem Ausführungsbeispiel weist das Katalysatormaterial ein drittes Metalloxid auf, welches ein Metall der Lanthanoiden des Periodensystems aufweist. Dies ist eine sehr spezifische Zusammensetzung des Katalysatormaterials. Insbesondere sind hier zumindest drei verschiedene Metalloxide genutzt. Das Katalysatormaterial ist somit eine Multimetalloxid-Zusammensetzung mit zumindest drei verschiedenen spezifischen Metalloxiden. Auch dadurch ist die oben genannte spezifische Ausgestaltung bezüglich der stark unterschiedlichen Aktivitätsraten in den einzelnen Temperaturintervallen des Normalbetriebs einerseits und des Pyrolysebetriebs andererseits unterstützt.

In einem Ausführungsbeispiel beträgt ein Masseanteil des ersten Metalloxids am gesamten Katalysatormaterial zwischen 1,0 und 2,0 beträgt, insbesondere im Vergleich zu zumindest einem anderen Bestandteil des Katalysatormaterials, insbesondere zu einem zweiten Metalloxid des Katalysatormaterials und/oder zu einem dritten Metalloxid des Katalysatormaterials. Insbesondere ist somit Manganoxid mit diesem Anteil am gesamten Katalysatormaterial beteiligt.

In einem Ausführungsbeispiel ist ein Masseanteil des zweiten Metalloxids am gesamten Katalysatormaterial zwischen 0,5 und 1,5 beträgt, insbesondere im Vergleich zu zumindest einem anderen Bestandteil des Katalysatormaterials, insbesondere zu einem ersten Metalloxid des Katalysatormaterials und/oder zu einem dritten Metalloxid des Katalysatormaterials. Insbesondere Kupferoxid (Cu₂O) ist somit mit diesem Anteil an dem gesamten Katalysatormaterial beteiligt.

In einem Ausführungsbeispiel ist ein Masseanteil des dritten Metalloxids am gesamten Katalysatormaterial zwischen 2,0 und 4,0 beträgt, insbesondere im Vergleich zu zumindest einem anderen Bestandteil des Katalysatormaterials, insbesondere zu einem ersten Metalloxid des Katalysatormaterials und/oder zu einem zweiten Metalloxid des Katalysatormaterials. Das dritte Metalloxid ist insbesondere ein Ceroxid, insbesondere Ce₂O₃.

Derartige Massenanteile der einzelnen Metalloxide sowie die diesbezüglich spezifizierten Metalloxide ermöglichen im besonderen Maße die oben genannten Vorteile. Das Katalysatormaterial ist insbesondere jeweils nur aus den zumindest zwei Metalloxiden ausgebildet. Es kann daher aus zwei oder vorzugsweise aus den drei Metalloxiden gebildet sein, insbesondere bestehen.

In einem Ausführungsbeispiel weist der Katalysator als Träger eine Wabenstruktur auf. Dadurch ist in besonders vorteilhafter Weise einerseits ein kompakter Aufbau, andererseits jedoch eine möglichst große Oberfläche bereitgestellt.

Vorzugsweise weist dieser Träger des Katalysators eine Oberfläche größer 40.000 mm² auf. Insbesondere beträgt diese Oberfläche zwischen 40.000 mm² und 100.000 mm². Vorzugsweise sind alle Zwischenwerte zwischen diesen Intervallgrenzen, insbesondere in Einerschritten, als offenbart anzusehen.

Besonders vorteilhaft ist es auch, dass der Backofen ohne individuelle Katalysatorheizung ausgebildet ist. Damit kann die Bauteilzahl reduziert werden. Insbesondere weist der Backofen zumindest einen Heizkörper auf, der in seiner Primärfunktion eine Heizfunktion des Backofens selbst erfüllt. Es kann vorgesehen sein, dass dieser Heizkörper in einem Ausführungsbeispiel dazu genutzt ist, den Katalysator zu erwärmen. Damit ist eine Multifunktionalität eines derartigen Heizkörpers des Backofens vorgesehen. Der Heizkörper kann ein Grillheizkörper oder ein Oberhitzeheizkörper oder ein sonstiges Ringelement als Heizkörper sein.

Vorzugsweise ist es bei einem solchen Ausführungsbeispiel vorgesehen, dass der diesbezügliche Heizkörper des Backofens und der Katalysator in einem Abstand zwischen größer oder gleich 12 mm, insbesondere zwischen 12 mm und 25 mm, zueinander angeordnet sind. Es ist somit eine Positionierung des Katalysators in der Wrasenabführvorrichtung des Backofens vorgesehen, sodass der Wrasenstrom, insbesondere der Wrasenvolumenstrom, direkt zu dem Katalysator gelangt und der Katalysator in diesbezüglicher unmittelbarer Nähe zum Garraum und zu einem oben genannten Heizkörper des Backofens angeordnet ist.

Insbesondere ist, wie bereits oben erwähnt, der Katalysator so ausgebildet, dass ein katalytisch aktiver Temperaturbereich, bei dem der Katalysator wirkt, oberhalb der Temperaturwerte, wie sie in einem Normalbetrieb des Backofens auftreten, liegt.

In einem Ausführungsbeispiel ist die Geometrie des Katalysators so gestaltet, dass sein Strömungswiderstand äquivalent groß zu einem Loch mit einem Durchmesser zwischen 24 mm und 28 mm, insbesondere 26 mm, ist. Insbesondere ist diese geometrische Spezifikation dadurch erreicht, dass der Träger eine Wabenstruktur aufweist, insbesondere eine geometrische Oberfläche von größer oder gleich 40.000 mm² aufweist.

Indem das Katalysatormaterial auch edelmetallfrei ist, kann auch ein kostenreduzierter Backofen bereitgestellt werden. Auch bietet dieses Ausführungsbeispiel Umweltschutzvorteile. Indem durch diesen Katalysator auch erreicht ist, dass keine eigene Katalysatorheizung benötigt wird, die primär dazu vorgesehen ist, den Katalysator zu heizen, können auch unerwünschte Einflüsse auf das Zubereitungsergebnis eines Garguts im Garraum durch lokal begrenzte Überhitzung vermieden werden. Die Integrierbarkeit des Katalysators ist darüber hinaus kompakt und anderweitige unerwünschte Einflüsse können ebenfalls vermieden werden.

Ein weiterer unabhängiger Aspekt der Erfindung betrifft einen Backofen mit einem Garraum zum Zubereiten von Lebensmitteln. Der Backofen weist darüber hinaus eine Wrasenabführvorrichtung auf, mit welcher Wrasen aus dem Garraum abführbar sind. Der Backofen weist darüber hinaus einen Katalysator auf. Dieser Katalysator ist mit der Wrasenabführvorrichtung fluidisch gekoppelt. Dies bedeutet auch hier, dass Wrasen in der Wrasenabführvorrichtung zum Katalysator geleitet werden, um dort katalytisch umgesetzt zu werden. Somit werden die in der Wrasenabführvorrichtung abgeführten Wrasen mit dem Katalysator katalytisch beeinflusst. Der Katalysator weist zumindest einen Träger auf, auf dem zumindest eine Schicht mit Katalysatormaterial aufgebracht ist. Das Katalysatormaterial weist ein erstes Metalloxid auf, welches ein Metall aus der Mangangruppe aufweist. Das Katalysatormaterial weist ein zweites Metalloxid auf, welches ein Metall aus der Kupfergruppe aufweist. Das Katalysatormaterial weist darüber hinaus ein drittes Metalloxid auf, welches ein Metall der Lanthanoiden aufweist.

Ausführungsbeispiele des oben genannten ersten unabhängigen Aspekts der Erfindung betreffend den Backofen sind als vorteilhafte Ausführungsbeispiele dieses weiteren unabhängigen Aspekts des Backofens anzusehen.

Ein nochmals weiterer unabhängiger Aspekt der Erfindung betrifft einen Backofen, der einen Garraum zum Zubereiten von Lebensmitteln aufweist. Darüber hinaus weist der Backofen eine Wrasenabführvorrichtung auf, mit welcher Wrasen aus dem Garraum abführbar sind. Der Backofen weist darüber hinaus einen Katalysator auf. Der Katalysator ist mit der Wrasenabführvorrichtung fluidisch gekoppelt, sodass die in der Wrasenabführvorrichtung geführten Wrasen mit dem Katalysator katalytisch beeinflusst werden. Der Katalysator weist zumindest einen Träger auf, auf dem zumindest eine Schicht mit Katalysatormaterial aufgebracht ist. Der Backofen weist zumindest einen Normalbetrieb zum Zubereiten von Gargut auf. Darüber hinaus weist der Backofen einen zum Normalbetrieb unterschiedlichen Pyrolysebetrieb auf. Das Katalysatormaterial des Katalysators ist edelmetallfrei.

Ausführungsbeispiele der oben genannten unabhängigen Aspekte betreffend den Backofen sind als vorteilhafte Ausführungsbeispiele dieses nochmals weiteren unabhängigen Aspekts des Backofens anzusehen.

Ein weiterer Aspekt der Erfindung betrifft ein Verfahren zum Betreiben eines Backofens, insbesondere gemäß dem oben genannten Aspekt oder einem vorteilhaften Ausführungsbeispiel davon, bei welchem im Normalbetrieb des Backofens die Wrasen mit dem Katalysator so umgesetzt werden, dass eine Konzentration von Essigsäure in den umgesetzten Wrasen kleiner oder gleich 5 ppm beträgt. Insbesondere werden zusätzlich oder anstatt dazu die Wrasen im Pyrolysebetrieb des Backofens die Wrasen mit dem Katalysator so umgesetzt werden, dass eine Konzentration von Essigsäure in den umgesetzten Wrasen kleiner oder gleich 100 ppb beträgt. Es wird also beim Umsetzen die Konzentration der Essigsäure in den umgesetzten Wrasen im Normalbetrieb kleiner oder gleich 5 ppm gehalten und/oder die Konzentration der Essigsäure in den umgesetzten Wrasen im Pyrolysebetrieb kleiner oder gleich 100 ppb gehalten

Ein weiterer unabhängiger Aspekt der Erfindung betrifft die Verwendung eines Katalysators mit einer Aktivitätsrate, insbesondere für eine Substanz der Wrasen, die bei Temperaturwerten im Normalbetrieb kleiner oder gleich 35 Prozent ist und die Aktivitätsrate bei Temperaturwerten im Pyrolysebetrieb größer 70 Prozent ist, zum katalytischen Behandeln eines Wrasenstroms in einem Backofen. Eine derartige Verwendung eines solchen spezifischen Katalysators zum katalytischen Behandeln eines Wrasenstroms in einem Backofen ermöglicht in besonders vorteilhafter Weise, dass im Normalbetrieb des Backofens und somit beim Durchführen eines Zubereitungsprogramms für ein Gargut quasi keine oder nur eine geringe und das Gargut und die Geruchsemission praktisch nicht beeinflussende Aktivität des Katalysators auftritt, im Pyrolysebetrieb des Backofens jedoch eine diesbezüglich sehr hohe Aktivitätsrate auftritt und somit eine sehr hohe katalytische Umsetzung erfolgt.

Ein weiterer Aspekt der Erfindung betrifft eine Verwendung eines solchen Katalysators zum Einsatz in einem Backofen.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßen Positionieren des Backofens gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:

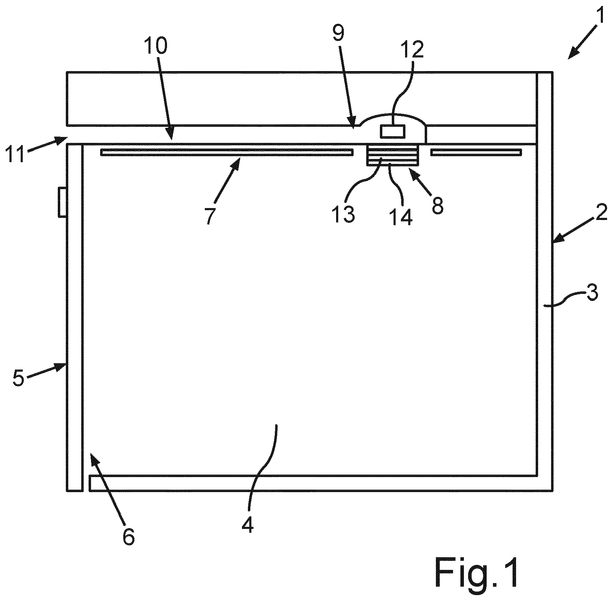

- Fig. 1: eine schematische Darstellung eines Ausführungsbeispiels eines erfindungsgemäßen Backofens.

In Fig. 1 ist ein Backofen 1 in einer schematischen Vertikalschnittdarstellung gezeigt. Der Backofen 1 weist ein Gehäuse 2 auf. In dem Gehäuse 2 ist eine Muffel 3 angeordnet, die mit ihren Wänden einen Garraum 4 begrenzt. Der Backofen 1 weist darüber hinaus eine Tür 5 auf, die an dem Gehäuse 2 bewegbar angeordnet ist. Die Tür 5 ist zum frontseitigen Verschließen einer Beschickungsöffnung 6 der Muffel 3 vorgesehen. Des Weiteren weist der Backofen 1 zumindest einen Heizkörper 7 auf. Der Heizkörper 7 ist bestimmungsgemäß dazu vorgesehen, in seiner Primärfunktion Hitze bei einem Zubereitungsprogramm des Gargeräts 1 zu erzeugen. Der Heizkörper 7 kann beispielsweise ein Grillheizkörper oder ein Oberhitzeheizkörper oder ein Unterhitzeheizkörper oder ein Ringheizkörper sein. In einem Ausführungsbeispiel weist der Backofen 1 einen Katalysator 8 auf. Der Katalysator 8 ist beabstandet zu dem Heizkörper 7 angeordnet, wobei dieser Abstand insbesondere zwischen 12 mm und 25 mm beträgt. Insbesondere ist im vorliegenden Ausführungsbeispiel dieser Abstand an der Stelle bemessen, an der der Katalysator 8 dem Heizkörper 7 am nächsten liegt. Beispielsweise kann dieser Abstand in horizontaler Richtung bemessen sein.

Der Backofen 1 weist darüber hinaus eine Wrasenabführvorrichtung 9 auf. Wrasen, die insbesondere im Betrieb des Backofens 1 im Garraum 4 entstehen, können durch diese Wrasenabführvorrichtung 9 aus dem Garraum 4 und über einen Abluftkanal 10 der Wrasenabführvorrichtung 9 aus dem Backofen 1 abgeführt werden. Insbesondere ist beispielsweise dazu vorgesehen, dass an einer Frontseite des Backofens 1 eine Auslassöffnung 11 gebildet ist, über welche diese Wrasen, insbesondere die katalytisch bearbeiteten Ströme, ausgeblasen werden können.

In einem Ausführungsbeispiel weist der Backofen 1 auch einen Lüfter 12 auf. Mit diesem können die Wrasen aus dem Garraum 4 abgesaugt werden und über den Abluftkanal 10 ausgeblasen werden. Der Katalysator 8 ist so angeordnet, dass er in diesem erzeugten Wrasenstrom angeordnet ist und diese Wrasen somit durch den Katalysator 8 katalytisch umgesetzt werden.

Der Katalysator 8 weist in einem Ausführungsbeispiel zumindest einen Träger 13 auf. Auf diesem zumindest einen Träger 13 ist zumindest eine Beschichtung 14 aufgebracht. Diese Beschichtung 14 weist in einem Ausführungsbeispiel ein Katalysatormaterial auf. Das Katalysatormaterial dieser Beschichtung 14 ist vorzugsweise edelmetallfrei. Insbesondere weist das Katalysatormaterial ein erstes Metalloxid auf, welches ein Metall aus der Mangangruppe aufweist. Dieses Metalloxid ist vorzugsweise Manganoxid (MnO). Vorzugsweise beträgt ein Masseanteil dieses ersten Metalloxids am gesamten Katalysatormaterial zwischen 1,0 und 2,0. Das Katalysatormaterial weist in einem Ausführungsbeispiel ein zum ersten Metalloxid unterschiedliches zweites Metalloxid auf. Dieses zweite Metalloxid weist ein Metall aus der Kupfergruppe auf. Insbesondere ist dieses zweite Metalloxid Cu₂O. Vorzugsweise beträgt der Masseanteil des zweiten Metalloxids am gesamten Katalysatormaterial zwischen 0,5 und 1,5. Vorzugsweise weist das Katalysatormaterial in einem Ausführungsbeispiel ein drittes Metalloxid auf, welches zu den ersten beiden Metalloxiden unterschiedlich ist. Das dritte Metalloxid weist als Metall ein Lanthanoid auf. Vorzugsweise ist dieses Lanthanoid Cer. Vorzugsweise ist dieses dritte Metalloxid Ce₂O₃. Vorzugsweise beträgt ein Masseanteil des dritten Metalloxids am gesamten Katalysatormaterial zwischen 2,0 Prozent und 4,0 Prozent. Das Katalysatormaterial besteht in einem Ausführungsbeispiel nur aus diesen drei Metalloxiden.

In einem Ausführungsbeispiel weist der Träger 13 eine Wabenstruktur auf. Insbesondere ist seine Oberfläche größer 40.000 mm², insbesondere zwischen 40.000 mm² und 100.000 mm².

Der Backofen 1 weist einen Normalbetrieb auf. In dem Normalbetrieb sind bestimmungsgemäß Zubereitungsprogramme zum Zubereiten von Gargut in dem Aufnahmeraum 4 durchgeführt. Vorzugsweise erstreckt sich der Normalbetrieb über ein Temperaturintervall von Temperaturen kleiner 330 °C bis zu diesem Maximalwert von 330 °C. Der Backofen 1 weist darüber hinaus einen zu einem Normalbetrieb unterschiedlichen Pyrolysebetrieb auf. Dieser Pyrolysebetrieb ist nicht dazu vorgesehen, Gargut in dem Garraum 4 zuzubereiten. Im Pyrolysebetrieb sind Temperaturen insbesondere im Garraum 4 eingestellt, die größer oder gleich 485 °C sind.

In einem Ausführungsbeispiel weist der Katalysator 8 eine Aktivitätsrate für eine Substanz, insbesondere für eine Oxidation der Substanz, insbesondere Ethanol, auf, die bei Temperaturwerten im Normalbetrieb kleiner oder gleich 35 Prozent ist. Der Katalysator 8 weist in einem Ausführungsbeispiel eine Aktivitätsrate bei Temperaturwerten im Pyrolysebetrieb auf, die größer 70 Prozent ist, insbesondere bezüglich der Oxidation dieser Substanz.

In einem Ausführungsbeispiel ist der Katalysator 8 so ausgebildet, dass im Normalbetrieb des Backofens 1 eine Konzentration von Essigsäure in den umgesetzten Wrasen kleiner oder gleich 5ppm beträgt, insbesondere zwischen 1ppm und 5ppm beträgt. In einem Ausführungsbeispiel ist der Katalysator 8 so ausgebildet, dass im Pyrolysebetrieb des Backofens 1 eine Konzentration von Essigsäure in den umgesetzten Wrasen kleiner 100ppb ist.

### Bezugszeichenliste

- 1: Backofen
- 2: Gehäuse
- 3: Muffel
- 4: Garraum
- 5: Tür
- 6: Beschickungsöffnung
- 7: Heizkörper
- 8: Katalysator
- 9: Wrasenabführvorrichtung
- 10: Abluftkanal
- 11: Auslassöffnung
- 12: Lüfter
- 13: Träger
- 14: Beschichtung

- x: Breitenrichtung
- y: Höhenrichtung
- z: Tiefenrichtung
- A: Längsachse

## Patentansprüche

1. Backofen (1), mit einem Garraum (4) zum Zubereiten von Lebensmitteln und mit einer Wrasenabführvorrichtung (9) mit welcher Wrasen aus dem Garraum (4) abführbar sind, und mit einem Katalysator (8), der mit der Wrasenabführvorrichtung (9) fluidisch gekoppelt ist, so dass die in der Wrasenabführvorrichtung (9) abgeführten Wrasen mit dem Katalysator (8) katalytisch beeinflussbar sind, wobei der Katalysator (8) zumindest einen Träger (13) aufweist, auf dem zumindest eine Schicht (14) mit Katalysatormaterial aufgebracht ist, wobei der Backofen (1) zumindest einen Normalbetrieb zum Zubereiten von Gargut aufweist, und einen dazu unterschiedlichen Pyrolysebetrieb aufweist, **dadurch gekennzeichnet, dass** der Katalysator (8) so ausgebildet ist, dass im Normalbetrieb des Backofens (1) eine Konzentration von Essigsäure in den umgesetzten Wrasen kleiner oder gleich 5 ppm beträgt.

2. Backofen (1) nach Anspruch 1, **dadurch gekennzeichnet, dass** der Katalysator (8) so ausgebildet ist, dass im Normalbetrieb des Backofens (1) eine Konzentration von Essigsäure in den umgesetzten Wrasen zwischen 1 ppm und 5 ppm beträgt.

3. Backofen (1) nach Anspruch 1 oder 2, **dadurch gekennzeichnet, dass** der Katalysator (8) so ausgebildet ist, dass im Pyrolysebetrieb des Backofens (1) eine Konzentration von Essigsäure in den umgesetzten Wrasen kleiner 100 ppb ist.

4. Backofen (1) nach einem der vorhergehenden Ansprüche, **dadurch gekennzeichnet, dass** der Katalysator (8) eine Aktivitätsrate für eine Vergleichssubstanz, insbesondere CO oder C3H6, aufweist, die bei Temperaturwerten im Normalbetrieb kleiner oder gleich 35 % ist, insbesondere kleiner oder gleich 30 %, insbesondere kleiner oder gleich 20%, ist, und diese Aktivitätsrate bei Temperaturwerten im Pyrolysebetrieb größer 70%, insbesondere größer 80%, insbesondere größer 90%, ist.

5. Backofen (1) nach einem der vorhergehenden Ansprüche, **dadurch gekennzeichnet, dass** die Temperaturwerte im Normalbetrieb kleiner oder gleich 330 °C, insbesondere kleiner oder gleich 300°C, sind.

6. Backofen (1) nach einem der vorhergehenden Ansprüche, **dadurch gekennzeichnet, dass** die Temperaturwerte im Pyrolysebetrieb größer oder gleich 400 °C, insbesondere größer oder gleich 485 °C, sind.

7. Backofen (1) nach einem der vorhergehenden Ansprüche, **dadurch gekennzeichnet, dass** das Katalysatormaterial edelmetallfrei ist, insbesondere das Katalysatormaterial frei von Platin und Palladium ist.

8. Backofen (1) nach einem der vorhergehenden Ansprüche, **dadurch gekennzeichnet, dass** das Katalysatormaterial ein erstes Metalloxid aufweist, welches ein Metall aus der Mangangruppe aufweist, ein zweites Metalloxid aufweist, welches ein Metall aus der Kupfergruppe aufweist, und ein drittes Metalloxid aufweist, welches ein Metall der Lanthanoiden aufweist.

9. Backofen (1) nach Anspruch 8, **dadurch gekennzeichnet, dass** ein Anteil des ersten Metalloxids am gesamten Katalysatormaterial zwischen 1,0 und 2,0 beträgt, insbesondere im Vergleich zu zumindest einem anderen Bestandteil des Katalysatormaterials, insbesondere zu einem zweiten Metalloxid des Katalysatormaterials und/oder zu einem dritten Metalloxid des Katalysatormaterials.

10. Backofen (1) nach Anspruch 8 oder 9, **dadurch gekennzeichnet, dass** ein Anteil des zweiten Metalloxids am gesamten Katalysatormaterial zwischen 0,5 und 1,5 beträgt, insbesondere im Vergleich zu zumindest einem anderen Bestandteil des Katalysatormaterials, insbesondere zu einem ersten Metalloxid des Katalysatormaterials und/oder zu einem dritten Metalloxid des Katalysatormaterials.

11. Backofen (1) nach einem der vorhergehenden Ansprüche 8 bis 10, **dadurch gekennzeichnet, dass** ein Anteil des dritten Metalloxids am gesamten Katalysatormaterial zwischen 2,0 und 4,0 beträgt, insbesondere im Vergleich zu zumindest einem anderen Bestandteil des Katalysatormaterials, insbesondere zu einem ersten Metalloxid des Katalysatormaterials und/oder zu einem zweiten Metalloxid des Katalysatormaterials.

12. Backofen (1) nach einem der vorhergehenden Ansprüche, **dadurch gekennzeichnet, dass** der Katalysator (8) als Träger (13) eine Wabenstruktur aufweist und/oder der Träger (13) eine Oberfläche größer 40000 mm2 aufweist, insbesondere eine Oberfläche zwischen 40000 mm2 und 100000 mm2 aufweist.

13. Backofen (1) nach einem der vorhergehenden Ansprüche, **dadurch gekennzeichnet, dass** der Backofen (1) einen Heizkörper (7) aufweist, wobei der Katalysator (8) in einem Abstand zwischen größer oder gleich 12 mm, insbesondere zwischen 12 mm und 25 mm, vom Heizkörper angeordnet ist.

14. Verfahren zum Betreiben eines Backofens (1) nach einem der vorhergehenden Ansprüche, bei welchem im Normalbetrieb des Backofens (1) die Wrasen mit dem Katalysator (8) so umgesetzt werden, dass eine Konzentration von Essigsäure in den umgesetzten Wrasen kleiner oder gleich 5 ppm beträgt.
